# EUROPÄISCHE PATENTANMELDUNG

(11) **EP 1 233 197 A1**
(43) Veröffentlichungstag der Anmeldung: **21.08.2002**
(21) Anmeldenummer: 02003095.3
(22) Anmeldetag: 13.02.2002
(51) Int. Cl.: F16C 33/10

(54) **Sintergleitlager mit mehreren Laufzonen**

(30) Priorität: 15.02.2001 DE 10107485
(71) Anmelder: ROBERT BOSCH GmbH, 70469 Stuttgart (DE); KARL SIMON GmbH & Co. KG, 78733 Aichhalden (DE)
(72) Erfinder: Dornhöfer, Gerd, Dr., 71229 Leonberg (DE); Vogt, Andreas, Dr., 71272 Renningen (DE); Koch, Hans-Peter, Dr., 70435 Stuttgart (DE); Kurz, Guido, 86853 Langerringen (DE); Stehr, Werner, 72160 Horb-Ahldorf (DE)
(74) Vertreter: Roth, Klaus

(57) **Zusammenfassung**

Es wird ein Sintergleitlager mit mehreren Laufzonen (1), wobei zwischen den Laufzonen (1) Abstandszonen (2) vorgesehen sind, vorgeschlagen, das die Entwicklung von Laufgeräuschen im Betriebszustand entscheidend verhindert. Dies wird erfindungsgemäß dadurch erreicht, dass wenigstens zwei unterschiedlich große Laufzonen (1) vorgesehen sind.

## Beschreibung

Die Erfindung betrifft ein Sintergleitlager mit mehreren Laufzonen nach dem Oberbegriff des Anspruchs 1.

### Stand der Technik

Bislang sind Sintergleitlager beispielsweise für Motoren, Getriebe oder dergleichen gemäß der Offenlegungsschrift DE 199 37 567 bekannt, die längs einer Lagerbohrung abwechselnd hoch verdichtete, kleinporige Laufflächen und niedrig verdichtete, offenporige Zonen zur Schmierstoffzufuhr bzw. -abfuhr und/oder als Schmierstoffdepot aufweisen.

Nachteilig bei Sintergleitlagern gemäß dem Stand der Technik ist jedoch, dass diese in bestimmten Betriebszuständen zu einer vergleichsweise starken Geräuschentwicklung neigen.

### Aufgabe und Vorteile der Erfindung

Aufgabe der Erfindung ist es demgegenüber, ein Sintergleitlager mit mehreren Laufzonen, wobei zwischen den Laufzonen Abstandszonen vorgesehen sind, vorzuschlagen, das die Entwicklung von Laufgeräuschen im Betriebszustand entscheidend verhindert.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Sintergleitlager dadurch aus, dass wenigstens zwei unterschiedlich große Laufzonen vorgesehen sind. Hierbei ist beispielsweise denkbar, dass die unterschiedlich großen Laufzonen in Achslängsrichtung unterschiedliche Breiten aufweisen.

In einer besonders vorteilhaften Ausführungsform erstrecken sich die beiden Laufzonen jedoch über Kreissegmente mit unterschiedlichen Winkeln. Erfindungsgemäß wird ermöglicht, dass in vorteilhafter Weise die Entstehung bzw. Verstärkung von Anregungsfrequenzen, die im Betrieb aufgrund der fertigungsbedingten nicht perfekt runden Form der Welle bzw. Achse entstehen könnten, nahezu vollständig vermieden wird. Diese Unrundheiten treten insbesondere auch in der Form von Polygonen auf, so dass Wellen bzw. Achsen eher als n-Eck zu beschreiben sind, wobei n in der Größenordnung zwischen 50 und 100 liegt. Mit Hilfe der erfindungsgemäßen Laufzonen wird die Entstehung von entsprechenden Laufgeräuschen, die in Abhängigkeit der Eckenanzahl sowie der Umdrehungsgeschwindigkeit der Wellen bzw. Achsen entstehen könnten, in vorteilhafter Weise wesentlich reduziert.

Vorzugsweise erstrecken sich alle Laufzonen über Kreissegmente mit unterschiedlichen Winkeln. Hierdurch ist eine weitere Reduzierung der Laufgeräusche realisierbar.

In einer besonderen Weiterbildung der Erfindung sind wenigstens zwei Abstandszonen vorgesehen, die sich über Kreissegmente mit unterschiedlichen Winkeln erstrecken. Mittels dieser Maßnahme wird die Symmetrie der Lagergeometrie weiter gebrochen, so dass wiederum eine weitere Reduzierung der Laufgeräusche realisierbar ist.

Vorteilhafterweise erstrecken sich alle Abstandszonen über Kreissegmente mit unterschiedlichen Winkeln, so dass eine weitest gehende Brechung der Lagerungsgeometrie als auch eine weitest gehende Verhinderung entsprechender Lagergeräusche erreicht wird, wobei gegebenenfalls alle Kreissegmente des Lagers unterschiedliche Winkel aufweisen.

In einer vorteilhaften Ausführungsform der Erfindung ist wenigstens eine Abstandszone als Schmierstoffzufuhrzone und/oder Schmierstoffabfuhrzone ausgebildet, so dass im Betrieb ein Schmieren der Laufflächen und der darüber gleitenden Welle bzw. Achse in vorteilhafter Weise erfolgt.

Vorzugsweise ist wenigstens eine Abstandszone als Schmierstoffdepot ausgebildet, so dass diese Abstandszone im Betrieb aus dem Sintergleitlager austretender Schmierstoff aufnehmen bzw. speichern kann. Beispielsweise werden die Schmierstoffdepots durch Rillenstrukturen mit mindestens zwei Längsrillen gebildet, wobei zumindest in einem Teil der Rillenstrukturen ein Teil der zwischen benachbarten Längsrillen verbleibenden Rillenkuppen mit der von der Lagerbohrung aufgenommenen Welle bzw. Achse zur Schmierstoffübergabe in Kontakt steht.

Grundsätzlich können auch stirn- oder umfangseitig angeordnete Schmierstoffdepots, insbesondere sacklochund/oder rillenartige Schmierstoffdepots, angeordnet werden, die gegebenenfalls über einen oder mehrere Verbindungskanäle, die beispielsweise als Rillen, Nuten oder Bohrungen ausgebildet sind, mit wenigstens einer Laufzone, insbesondere mit dem Lagerspalt, verbunden sind. Die Dimensionierung der Schmierstoffdepots und/oder der Verbindungskanäle erfolgt insbesondere in Abhängigkeit von kapillaren Eigenschaften des Schmierstoffs.

Generell kann die unregelmäßige Anordnung der Laufzonen und/oder Abstandszonen zufällig oder mittels entsprechender Festlegungsverfahren realisiert werden, wobei insbesondere quasi zufällige, mathematische Berechnungsverfahren als Grundlage vorgesehen werden können. Das heißt, dass die Breite bzw. die Winkel der Kreissegmente in vorteilhafter Weise nach dem Zufallsprinzip ausgewählt werden.

### Ausführungsbeispiel

Ein Ausführungsbeispiel ist in der Zeichnung dargestellt und wird anhand der einzigen Figur näher erläutert, die einen schematischen Querschnitt eines erfindungsgemäßen Sintergleitlagers zeigt.

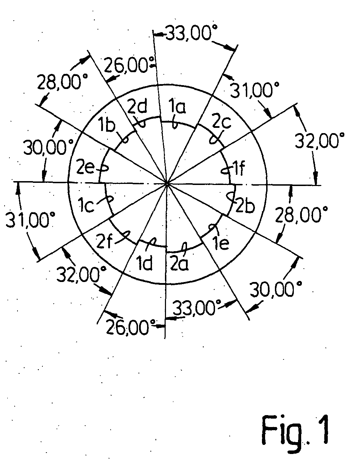

Ein erfindungsgemäßes Sintergleitlager gemäß Figur 1 weist mehrere Laufflächen 1a, b, c, d, e, f mit einer im Betrieb hydrodynamischen Schmierung auf. Zwischen den Laufzonen 1a, b, c, d, e, f sind Abstandszonen 2a, b, c, d, e, f dargestellt, die gemäß Figur 1 zugleich als Schmierstoffdepots ausgebildet sind.

Die erfindungsgemäße Ausbildung der Laufzonen 1 sowie der Abstandszonen 2 wird vor allem mittels der dargestellten Winkelbeträge der entsprechenden Kreissegmente verdeutlicht. Hierbei erstrecken sich beispielhaft alle Laufzonen 1 über Kreissegmente mit unterschiedlichen Winkeln. Zugleich ist als besondere erfindungsgemäße Variante die Ausbildung der Abstandszonen 2 entsprechend den Kreissegmenten der Laufzonen 1 umgesetzt.

Dem dargestellten Ausführungsbeispiel liegt ein nachfolgend näher erläutertes Berechnungsverfahren zugrunde, bei dem folgendermaßen vorgegangen wird:
Das Lager wird in eine gerade Anzahl N von Bereichen unterteilt, zum Beispiel N = 6,
jeder Bereich besteht aus je einer hoch und einer niedrig verdichtenden Zone, das heißt aus einer Laufbahn 1 sowie einer Abstandszone 2,
die N Bereichsgrenzen B liegen bei n * 360°/N mit n = 1 bis N; bei der dargestellten Variante zum Beispiel bei 60°, 120°, 180°, ...,
die Bereichsgrenzen B werden wie folgt verschoben;
   neue Bereichsgrenze B' = n * 360°/N + (z * Δ), wobei z eine Zufallszahl im Bereich zwischen -0,5 und +0,5 und Δ die maximale Variation der Bereichsgrenze B ist. In der dargestellten Variante wird für Δ ein Wert von 9° angenommen, das heißt 15 % der gesamten ursprünglichen Bereichsbreite B. n nimmt hier nur Werte zwischen 1 und 5 an, wobei die letzte Bereichsgrenze B nicht nach der Formel berechnet wird, sondern durch die Ergänzung des letzten Bereichs auf den Vollkreis gegeben ist,
   da jeder Bereich aus zwei zunächst gleich breiten Zonen besteht, das heißt aus einer Laufbahn 1 und einer Abstandszone 2, werden zur zusätzlichen Symmetriebrechung der Lagerungsgeometrie jeweils gegenüberliegende Abstandszonen 2 miteinander vertauscht.

Grundsätzlich ist die zuvor beschriebene Berechnungsmethode zur Segmentgrenzenbestimmung lediglich eine von unbegrenzt möglichen Varianten. Hierbei ist nicht entscheidend, wie die Unregelmäßigkeit der Zonenverteilung erzeugt wird, sondern dass eine entsprechende Unregelmäßigkeit der Zonenverteilung vorgesehen ist.

Bei der Herstellung eines erfindungsgemäßen Sintergleitlagers wird beispielsweise ein sogenannter "Grünling" mit einer erfindungsgemäßen Bohrungsgeometrie gefertigt, beispielsweise gemäß Figur 1. Der bei der Fertigung notwendige abschließende Kalibriervorgang der Lagerbohrung erfolgt gegebenenfalls in der Weise, dass das endgültige Maß der Lagerbohrung dadurch erzeugt wird, dass die herausstehenden Bereiche der Laufzonen 1 hoch verdichtet werden, so dass diese auf einen etwas größeren Durchmesser der Bohrung gebracht werden.

An den Grenzen der Laufbahnen 1 bzw. Abstandszonen 2 bleiben jedoch kleine, insbesondere abgerundete, Abstufungen beispielsweise im Mikrometer-Bereich erhalten. Hierdurch wird in vorteilhafter Weise die Abstandszone 2 als offenporige Schmierstoffzufuhr- bzw. Schmierstoffabfuhrzone als auch zusätzlich als Schmierstoffdepot ausgebildet.

## Patentansprüche

1. Sintergleitlager mit mehreren Laufzonen (1), wobei zwischen den Laufzonen (1) Abstandszonen (2) vorgesehen sind, **dadurch gekennzeichnet, dass** wenigstens zwei unterschiedliche große Laufzonen (1) vorgesehen sind.

2. Sintergleitlager nach Anspruch 1, **dadurch gekennzeichnet, dass** sich wenigstens die zwei Laufzonen (1) über Kreissegmente mit unterschiedlichen Winkeln erstrecken.

3. Sintergleitlager nach einem der vorgenannten Ansprüche, **dadurch gekennzeichnet, dass** sich alle Laufzonen (1) über Kreissegmente mit unterschiedlichen Winkeln erstrecken.

4. Sintergleitlager nach einem der vorgenannten Ansprüche, **dadurch gekennzeichnet, dass** wenigstens zwei Abstandszonen (2) vorgesehen sind, die sich über Kreissegmente mit unterschiedlichen Winkeln erstrecken.

5. Sintergleitlager nach einem der vorgenannten Ansprüche, **dadurch gekennzeichnet, dass** sich alle Abstandszonen (2) über Kreissegmente mit unterschiedlichen Winkeln erstrecken.

6. Sintergleitlager nach einem der vorgenannten Ansprüche, **dadurch gekennzeichnet, dass** wenigstens eine Abstandszone (2) als Schmierstoffzufuhrzone und/oder Schmierstoffabfuhrzone ausgebildet ist.

7. Sintergleitlager nach einem der vorgenannten Ansprüche, **dadurch gekennzeichnet, dass** wenigstens eine Abstandszone (2) als Schmierstoffdepot ausgebildet ist.

8. Sintergleitlager nach einem der vorgenannten Ansprüche, **dadurch gekennzeichnet, dass** zufällig ausgewählte Größen der Laufzonen (1) und/oder Abstandszonen (2) vorgesehen sind.
